Europäisches Patentamt

European Patent Office

Office européen des brevets

(11) Veröffentlichungsnummer: **0 442 402 B1**

(12) **EUROPÄISCHE PATENTSCHRIFT**

(45) Veröffentlichungstag der Patentschrift: **07.12.94**

(51) Int. Cl.5: **C08G 18/44**, C08G 64/02, C08G 65/32

(21) Anmeldenummer: **91101836.4**

(22) Anmeldetag: **09.02.91**

Die Akte enthält technische Angaben, die nach dem Eingang der Anmeldung eingereicht wurden und die nicht in dieser Patentschrift enthalten sind.

(54) **Polyetherpolycarbonatdiole.**

(30) Priorität: **16.02.90 DE 4004882**

(43) Veröffentlichungstag der Anmeldung:
**21.08.91 Patentblatt 91/34**

(45) Bekanntmachung des Hinweises auf die Patenterteilung:
**07.12.94 Patentblatt 94/49**

(84) Benannte Vertragsstaaten:
**BE DE FR GB NL**

(56) Entgegenhaltungen:
**EP-A- 0 135 848
EP-A- 0 292 772
EP-A- 0 335 416
EP-A- 0 358 555
US-A- 4 463 141**

**WORLD PATENTS INDEX LATEST Week 8529,
Derwent Publications Ltd., London, GB;
AN85-174989**

(73) Patentinhaber: **BASF Aktiengesellschaft
Carl-Bosch-Strasse 38
D-67063 Ludwigshafen (DE)**

(72) Erfinder: **Bott, Kaspar, Dr.
Werderstrasse 57
W-6800 Mannheim 1 (DE)**
Erfinder: **Straehle, Wolfgang, Dr.
Hampeweg 9
W-6900 Heidelberg (DE)**
Erfinder: **Abel, Ulrich, Dr.
Ludwigstrasse 65
W-6701 Waldsee (DE)**

**Beschreibung**

Die vorliegende Erfindung betrifft Polyetherpolycarbonatdiole, aufgebaut im wesentlichen aus

A) 3 bis 63,7 mol-% an Einheiten, die sich ableiten von einem Polyoxytetramethylendiol

B) 63,7 bis 3 mol-% an Einheiten, die sich ableiten von einem von A) verschiedenen Polyoxyalkylendiol mit $C_2$- bis $C_8$-Alkylengruppen, einem aliphatischen Alkandiol mit 2 bis 14 C-Atomen, einem alicyclischen Alkandiol mit 3 bis 14 C-Atomen oder einem Alkylenoxid mit 2 oder 3 C-Atomen oder deren Mischungen

C) 33,3 bis 50 mol-% an Einheiten, die sich ableiten von Phosgen, einem Dialkylcarbonat mit $C_1$- bis $C_4$-Alkylgruppen oder einem cyclischen Carbonat mit $C_2$- bis $C_4$-Alkylenbrücken oder deren Mischungen.

Außerdem betrifft die Erfindung die Verwendung der Polyetherpolycarbonatdiole zur Herstellung von thermoplastischen Polyurethanen, Polyetherestern, Polyetheramiden und zellIgen Polyurethanelastomeren sowie die, unter Verwendung der Polyetherpolycarbonatdiolen als Diolkomponente hergestellten thermoplastischen Polyurethane, Polyetherester, Polyetheramide und zelligen Polyurethanelastomeren.

Polyetherpolycarbonatdiole werden vor allem bei der Herstellung von thermoplastischen Polyurethanen verwendet.

Die EP-A- 358 555 beschreibt Polyetherpolycarbonatdiole, die aus cyclischen Carbonaten oder Dialkylcarbonaten mit Mischungen aus Polyetherpolyolen mit einem Molekulargewicht von 300 bis 2000 und polyvalenten Alkoholen, bei denen die Anzahl der Kohlenstoffatome höchstens 20 beträgt, hergestellt werden.

In der US-4 463 141 und der EP-A-335 416 sind mit Carbonatgruppen modifizierte Polyoxytetramethylendiole und deren Herstellung beschrieben. Polyetherpolycarbonatdiole mit aromatischen Struktureinheiten sind aus der DE-A-2 726 416 bekannt. Die mechanischen und optischen Eigenschaften der aus diesen Verbindungen hergestellten Produkte sind jedoch nicht in vollem Maße zufriedenstellend.

Aufgabe der Erfindung war es daher, Polyetherpolycarbonatdiole zur Verfügung zu stellen, aus denen sich thermoplastische Polyurethane, Polyetherester, Polyetheramide und zellige Polyurethanelastomere mit einem insgesamt zufriedenstellenderem Eigenschaftsspektrum herstellen lassen.

Demgemäß wurden die eingangs definierten Polyetherpolycarbonatdiole gefunden. Weiterhin wurde die Verwendung der Polyetherpolycarbonatdiole zur Herstellung von thermoplastischen Polyurethanen, Polyetherestern, Polyetheramiden und zelligen Polyurethanelastomeren (DE-PS 913 474) sowie die, unter Verwendung der Polyetherpolycarbonatdiolen als Diolkomponente hergestellten thermoplastischen Polyurethane, Polyetherester, Polyetheramide und zelligen Polyurethanelastomeren gefunden.

Da die EP-A 358 555 für DE, FR und GB als Stand der Technik nach Artikel 54(3) EPÜ gilt, gilt für diese Vertragsstaaten der vorgesehene Anspruchssatz.

Die als Komponente A) eingesetzten Polyoxytetramethylendiole (auch Polytetrahydrofurane oder Polyoxytetramethyletherglykole genannt) lassen sich nach bekannten Methoden durch katalytische Polymerisation von Tetrahydrofuran herstellen. Sie weisen i.a. ein durchschnittliches Molekulargewicht $\overline{M}_n$ - (Zahlenmittelwert) von 150 bis 5000 auf, bevorzugt von 200 bis 2900.

Der Anteil der Einheiten, die sich von der Komponente A) ableiten, beträgt 3 bis 63,7 mol-%, vorzugsweise 20 bis 50 mol-%.

Als Komponente B) haben sich von A) verschiedene Polyoxyalkylendiole mit $C_2$- bis $C_8$-Alkylengruppen, insbesondere mit $C_2$- bis $C_4$-Alkylengruppen als geeignet erwiesen. Polyoxytetramethylendiole, die ein, von dem der Komponente A), unterschiedliches mittleres Molekulargewicht $\overline{M}_n$ (Zahlenmittelwert) aufweisen, sind bevorzugt zu nennen. Lineare und verzweigte Alkandiole mit 2 bis 14 C-Atomen, insbesondere Ethandiol, 1,3-Propandiol, 1,2-Propandiol, 1,4-Butandiol, 1,3-Butandiol, 1,5-Pentandiol, 1,6-Hexandiol, 1,7-Heptandiol und 1,8-Octandiol haben sich als besondes geeignet erwiesen. Von den cycloaliphatischen Diolen mit 3 bis 14 C-Atomen sind die unsubstituierten und mit $C_1$- bis $C_4$-Alkylgruppen substituierten 5- und 6-Ringe besonders geeignet, vorzugsweise Dihydroxycyclohexan und 1,4-Dihydroxymethylcyclohexan. Ferner können Ethylen- und Propylenoxid eingesetzt werden, sowie Mischungen der als Komponenten B) verwendeten Verbindungen.

Die Einheiten, die sich von der Komponente B) ableiten, werden bei der Herstellung der erfindungsgemäßen Polyetherpolycarbonatdiolen in Mengen von 63,7 bis 3 mol-%, vorzugsweise in Mengen von 50 bis 20 mol-% verwendet.

Als Komponente C) sind Dialkylcarbonate mit $C_1$- bis $C_4$-Alkylgruppen bevorzugt, insbesondere Dimethylcarbonat, Diethylcarbonat und Dipropylcarbonat. Von den cyclischen Carbonaten mit $C_2$- bis $C_4$-Alkylenbrücken sind bevorzugt Ethylencarbonat, 1,2-Propylencarbonat sowie 1,3-Propylencarbonat zu nennen. Weiterhin kann noch Phosgen verwendet werden, sowie Mischungen der als Komponente C) genannten Verbindungen.

Die erfindungsgemäßen Polyetherpolycarbonatdiole enthalten die Einheiten, die sich von der Komponente C) ableiten, in Mengen von 33,3 bis 50 mol-%, insbesondere in Mengen von 40 bis 50 mol-%.

Es ist darauf hinzuweisen, daß in Abhängigkeit von der Art des eingesetzten Carbonats die Zusammensetzung der eingesetzten Monomermischung nicht immer auch die Zusammensetzung des Polyetherpolycarbonatdiols wiedergibt. In einigen Fällen treten Verluste an eingesetztem Carbonat bei der Umsetzung auf, so daß dieses in größeren Mengen eingesetzt werden muß. Im Falle von Phosgen hängt der Überschuß davon ab, wieviel Phosgen mit der gebildeten Salzsäure ausgetrieben wird und im besonders bevorzugten Fall von Dialkylcarbonaten, ob das eingesetzte Carbonat mit dem bei der Umesterung entstehenden Alkohol ein Azeotrop bildet oder nicht, wobei der Überschuß 0,5 bis 50 mol-%, bevorzugt 5 bis 35 mol-% beträgt.

Die Umsetzung der Komponenten A) und B) mit der Komponente C) wird bevorzugt in Gegenwart eines Katalysators durchgeführt.

Als Katalysatoren können die üblichen Umesterungskatalysatoren wie Tetraisopropylorthotitanat, Dibutylzinnoxid, Dibutylzinndilaurat und Zirkon-IV-acetylacetonat sowie Alkalialkoholate, beispielsweise Natrium-, Kaliummethylat und Natrium-, Kaliumethylat, verwendet werden. Die Menge an Katalysator beträgt 0,001 bis 2 %, bevorzugt 0,01 bis 0,5 %, bezogen auf die Gesamtmenge der Einsatzstoffe.

Die Reaktionskomponenten werden vorzugsweise mit dem Katalysator zum Sieden erhitzt, wobei bei der Verwendung von Dialkylcarbonaten der dabei gebildete entsprechende Alkohol oder das Azeotrop aus Carbonat und Alkohol destillativ abgetrennt werden kann. Die Umsetzung findet i.a. bei Temperaturen von 20 bis 250°C statt, bevorzugt bei 40 bis 200°C. Verwendet man Phosgen, so kann bei Temperaturen von 0 bis 100°C gearbeitet werden, vorzugsweise bei 20 bis 80°C. In diesem Fall wird der Reaktionsmasse zur Neutralisation der entstehenden Salzsäure bevorzugt eine Base, beispielsweise Pyridin oder Triethylamin hinzugegeben.

Bei der Verwendung von Alkalialkoholaten als Katalysator wird eine Reaktionstemperatur von 20 bis 150°C bevorzugt, insbesondere 40 bis 80°C, wobei zur Abtrennung des Katalysators dieser mit einer Säure wie Phosphorsäure neutralisiert wird, und das ausfallende Alkalisalz der betreffenden Säure abgetrennt wird.

Bei der Verwendung von Tetraisopropylorthotitanat als Katalysator wird eine Reaktionstemperatur von 40 bis 250°C bevorzugt, insbesondere 100 bis 200°C, wobei der überschüssige Katalysator nach erfolgter Reaktion beispielsweise durch Hinzufügen von Phosphorsäure desaktiviert werden kann.

Die Reaktion kann bei Normaldruck, Vakuum oder Überdruck durchgeführt werden. Üblicherweise wird am Ende der Reaktion ein Vakuum von 0,1 bis 5 mbar zur Entfernung der letzten Reste an leichter siedenden Anteilen angelegt. Die Reaktion ist beendet, wenn keine leichter siedenden Anteile mehr überdestillieren.

Die entstandenen Polyetherpolycarbonatdiole weisen ein durchschnittliches Molekulargewicht $\overline{M}_n$ - (Zahlenmittelwert) von 200 bis 12000, insbesondere von 500 bis 6000 auf.

Die erfindungsgemäßen Polyetherpolycarbonatdiole eignen sich besonders als Diolkomponente der Weichphase bei der Herstellung von thermoplastischen Polyurethanen, Polyetherestern, Polyetheramiden, zelligen Polyurethanelastomeren, Gießelastomeren und Fasern. Entsprechende Verfahren zur Herstellung derartiger Polymeren sind dem Fachmann an sich bekannt und in der Literatur beschrieben.

Beispiele 1 bis 5

Herstellung der Polyetherpolycarbonatdiole

Polyoxytetramethylendiol, Komponente B) und Diethylcarbonat wurden mit Tetraisopropylorthotitanat zum Sieden erhitzt und das dabei gebildete Ethanol ständig in einer Destillationskolonne (25 cm Füllhöhe, Füllkörper: 5 mm V-Stahl-Netze) unter Normaldruck bei einem Rücklaufverhältnis von 4:1 vom nicht umgesetzten Diethylcarbonat abdestilliert. Die Reaktion wurde bei einer Temperatur von 180°C durchgeführt. Zur Entfernung der leichter siedenden Anteile wurde ein Vakuum von 0,3 mbar (30 Pa) angelegt.

Die Komponente B) ist in den Beispielen 1 und 2 1,4-Butandiol, in den Beispielen 3 bis 5 1,6-Hexandiol.

Die Bestimmung der OH-Zahl und des mittleren Molekulargewichts $\overline{M}_n$ (Zahlenmittelwert) wurde wie folgt durchgeführt:

Das mittlere Molekulargewicht $\overline{M}_n$ (Zahlenmittelwert) wurde aus der OH-Zahl berechnet ($\overline{M}_n$ = 112200/OH-Zahl). Die OH-Zahl wurde durch potentiometrische Titration nach der PSA-Methode bestimmt.

| Bsp | Polyoxytetramethylendiol | | | Komponente B) | | Diethylcarbonat | | Tetraisopropyl-orthotitanat | Polyetherpolycarbonatdiol | | |
|---|---|---|---|---|---|---|---|---|---|---|---|
| | $\overline{M}_n$ | g | mol | g | mol | g | mol | g | Ausbeute g | OH-Zahl | $\overline{M}_n$ |
| 1 | 242 | 1625,0 | 6,7 | 585 | 6,5 | 1450,0 | 12,3 | 1,83 | 2498,0 | 61 | 1839 |
| 2 | 242 | 2100,0 | 8,7 | 252 | 2,8 | 1214,0 | 10,3 | 1,80 | 2592,5 | 69 | 1626 |
| 3 | 242 | 1500,0 | 6,2 | 708 | 6,0 | 1335,9 | 11,3 | 1,80 | 2498,6 | 60 | 1870 |
| 4 | 242 | 937,5 | 3,9 | 1180 | 10,0 | 1548,7 | 13,1 | 1,80 | 2454,0 | 55 | 2040 |
| 5 | 649 | 1950,0 | 3,0 | 767 | 6,5 | 1025,0 | 8,7 | 1,90 | 2930,6 | 57 | 1968 |

Bsp. 1 und 2: Komponente B): 1,4-Butandiol
Bsp. 3 bis 5: Komponente B): 1,6-Hexandiol

EP 0 442 402 B1

**Patentansprüche**
**Patentansprüche für folgende Vertragsstaaten : DE, FR, GB**

1. Polyetherpolycarbonatdiole, aufgebaut im wesentlichen aus
   A) 3 bis 63,7 mol-% an Einheiten, die sich ableiten von einem Polyoxytetramethylendiol mit einem mittleren Molekulargewicht $\overline{M}_n$ (Zahlenmittelwert) von 150 bis 242
   B) 63,7 bis 3 mol-% an Einheiten, die sich ableiten von einem von A) verschiedenen Polyoxyalkylendiol mit $C_2$- bis $C_8$-Alkylengruppen, einem aliphatischen Alkandiol mit 2 bis 14 C-Atomen, einem alicyclischen Alkandiol mit 3 bis 14 C-Atomen oder einem Alkylenoxid mit 2 oder 3 C-Atomen oder deren Mischungen
   C) 33,3 bis 50 mol-% an Einheiten, die sich ableiten von Phosgen, einem Dialkylcarbonat mit $C_1$- bis $C_4$-Alkylgruppen oder einem cyclischen Carbonat mit $C_2$- bis $C_4$-Alkylenbrücken oder deren Mischungen.

2. Polyetherpolycarbonatdiole nach Anspruch 1, dadurch gekennzeichnet, daß als Komponente B) ein aliphatisches Diol mit 2 bis 8 C-Atomen eingesetzt wird.

3. Polyetherpolycarbonatdiole nach den Ansprüchen 1 bis 2, dadurch gekennzeichnet, daß als Komponente C) ein Dialkylcarbonat mit $C_1$- bis $C_3$-Alkylgruppen eingesetzt wird.

4. Verwendung der Polyetherpolycarbonatdiole gemäß den Ansprüchen 1 bis 3 zur Herstellung von thermoplastischen Polyurethanen, Polyetherestern, Polyetheramiden und zelligen Polyurethanelastomeren.

5. Thermoplastische Polyurethane, hergestellt unter Verwendung der Polyetherpolycarbonatdiole gemäß den Ansprüchen 1 bis 3 als Diolkomponente.

6. Polyetherester, hergestellt unter Verwendung der Polyetherpolycarbonatdiole gemäß den Ansprüchen 1 bis 3 als Diolkomponente.

7. Polyetheramide, hergestellt unter Verwendung der Polyetherpolycarbonatdiole gemäß den Ansprüchen 1 bis 3 als Diolkomponente.

8. Zellige Polyurethanelastomere, hergestellt unter Verwendung der Polyetherpolycarbonatdiole gemäß den Ansprüchen 1 bis 3 als Diolkomponente.

**Patentansprüche für folgende Vertragsstaaten : BE, NL**

1. Polyetherpolycarbonatdiole, aufgebaut im wesentlichen aus
   A) 3 bis 63,7 mol-% an Einheiten, die sich ableiten von einem Polyoxytetramethylendiol
   B) 63,7 bis 3 mol-% an Einheiten, die sich ableiten von einem von A) verschiedenen Polyoxyalkylendiol mit $C_2$- bis $C_8$-Alkylengruppen, einem aliphatischen Alkandiol mit 2 bis 14 C-Atomen, einem alicyclischen Alkandiol mit 3 bis 14 C-Atomen oder einem Alkylenoxid mit 2 oder 3 C-Atomen oder deren Mischungen
   C) 33,3 bis 50 mol-% an Einheiten, die sich ableiten von Phosgen, einem Dialkylcarbonat mit $C_1$- bis $C_4$-Alkylgruppen oder einem cyclischen Carbonat mit $C_2$- bis $C_4$-Alkylenbrücken oder deren Mischungen.

2. Polyetherpolycarbonatdiole nach Anspruch 1, dadurch gekennzeichnet, daß als Komponente B) ein aliphatisches Diol mit 2 bis 8 C-Atomen eingesetzt wird.

3. Polyetherpolycarbonatdiole nach den Ansprüchen 1 bis 2, dadurch gekennzeichnet, daß als Komponente C) ein Dialkylcarbonat mit $C_1$- bis $C_3$-Alkylgruppen eingesetzt wird.

4. Verwendung der Polyetherpolycarbonatdiole gemäß den Ansprüchen 1 bis 3 zur Herstellung von thermoplastischen Polyurethanen, Polyetherestern, Polyetheramiden und zelligen Polyurethanelastomeren.

**5.** Thermoplastische Polyurethane, hergestellt unter Verwendung der Polyetherpolycarbonatdiole gemäß den Ansprüchen 1 bis 3 als Diolkomponente.

**6.** Polyetherester, hergestellt unter Verwendung der Polyetherpolycarbonatdiole gemäß den Ansprüchen 1 bis 3 als Diolkomponente.

**7.** Polyetheramide, hergestellt unter Verwendung der Polyetherpolycarbonatdiole gemäß den Ansprüchen 1 bis 3 als Diolkomponente.

**8.** Zellige Polyurethanelastomere, hergestellt unter Verwendung der Polyetherpolycarbonatdiole gemäß den Ansprüchen 1 bis 3 als Diolkomponente.

**Claims**
**Claims for the following Contracting States : DE, FR, GB**

**1.** A polyetherpolycarbonatediol composed essentially of
A) from 3 to 63.7 mol % of units derived from a polyoxytetramethylenediol, having an average molecular weight $\overline{M}_n$ (number average) of from 150 to 242,
B) from 63.7 to 3 mol % of units derived from a polyoxy-$C_2$-$C_8$-alkylenediol other than a), an aliphatic alkanediol of from 2 to 14 carbon atoms, an alicyclic alkanediol of from 3 to 14 carbon atoms or an alkylene oxide of 2 or 3 carbon atoms, or a mixture thereof, and
c) from 33.3 to 50 mol % of units derived from phosgene, a dialkyl carbonate having $C_1$-$C_4$-alkyl groups or a cyclic carbonate having $C_2$-$C_4$-alkylene bridges, or a mixture thereof.

**2.** A polyetherpolycarbonatediol as claimed in claim 1, wherein component B) is an aliphatic diol of from 2 to 8 carbon atoms.

**3.** A polyetherpolycarbonatediol as claimed in claim 1 or 2, wherein component C) is a dialkyl carbonate having $C_1$-$C_3$-alkyl groups.

**4.** The use of a polyetherpolycarbonatediol as claimed in claim 1 or 2 or 3 for producing a thermoplastic polyurethane, a polyetherester, a polyetheramide, or cellular polyurethane elastomer.

**5.** A thermoplastic polyurethane prepared using a polyetherpolycarbonatediol as claimed in claim 1 or 2 or 3 as diol component.

**6.** A polyetherester prepared using a polyetherpolycarbonatediol as claimed in claim 1 or 2 or 3 as diol component.

**7.** A polyetheramide prepared using a polyetherpolycarbonatediol as claimed in claim 1 or 2 or 3 as diol component.

**8.** A cellular polyurethane elastomer prepared using a polyetherpolycarbonatediol as claimed in claim 1 or 2 or 3 as diol component.

**Claims for the following Contracting States : BE, NL**

**1.** A polyetherpolycarbonatediol composed essentially of
A) from 3 to 63.7 mol % of units derived from a polyoxytetramethylenediol,
B) from 63.7 to 3 mol % of units derived from a polyoxy-$C_2$-$C_8$-alkylenediol other than a), an aliphatic alkanediol of from 2 to 14 carbon atoms, an alicyclic alkanediol of from 3 to 14 carbon atoms or an alkylene oxide of 2 or 3 carbon atoms, or a mixture thereof, and
c) from 33.3 to 50 mol % of units derived from phosgene, a dialkyl carbonate having $C_1$-$C_4$-alkyl groups or a cyclic carbonate having $C_2$-$C_4$-alkylene bridges, or a mixture thereof.

**2.** A polyetherpolycarbonatediol as claimed in claim 1, wherein component B) is an aliphatic diol of from 2 to 8 carbon atoms.

**3.** A polyetherpolycarbonatediol as claimed in claim 1 or 2, wherein component C) is a dialkyl carbonate having $C_1$-$C_3$-alkyl groups.

**4.** The use of a polyetherpolycarbonatediol as claimed in claim 1 or 2 or 3 for producing a thermoplastic polyurethane, a polyetherester, a polyetheramide or a cellular polyurethane elastomer.

**5.** A thermoplastic polyurethane prepared using a polyetherpolycarbonatediol as claimed in claim 1 or 2 or 3 as diol component.

**6.** A polyetherester prepared using a polyetherpolycarbonatediol as claimed in claim 1 or 2 or 3 or 4 as diol component.

**7.** A polyetheramide prepared using a polyetherpolycarbonatediol as claimed in claim 1 or 2 or 3 as diol component.

**8.** A cellular polyurethane elastomer prepared using a polyetherpolycarbonatediol as claimed in claim 1 or 2 or 3 as diol component.

**Revendications**

**Revendications pour les Etats contractants suivants : DE, FR, GB**

**1.** Polyétherpolycarbonatediols, constitués essentiellement par
A) 3 à 63.7% en moles de motifs qui dérivent d'un polyoxytétraméthylènediol ayant un poids moléculaire moyen $\overline{M}_n$ (moyenne en nombre) de 150 à 242.
B) 63,7 à 3% en moles de motifs qui dérivent d'un polyoxyalkylènediol différent de A) et contenant des groupements alkylène en $C_2$-$C_8$, d'un alcanediol aliphatique à 2-14 atomes de carbone, d'un alcanediol alycyclique à 3-14 atomes de carbone, d'un oxyde d'alkylène à 2 ou 3 atomes de carbone ou de mélanges de ceux-ci,
C) 33,3 à 50% en moles de motifs qui dérivent de phosgène, d'un carbonate de dialkyle contenant des groupements alkyle en $C_1$-$C_4$, d'un carbonate cyclique à groupements alkylène en $C_2$-$C_4$ de pontage ou de mélanges de ceux-ci.

**2.** Polyétherpolycarbonatediols selon la revendication 1, caractérisés en ce qu'un diol aliphatique à 2-8 atomes de carbone est utilisé comme composant B).

**3.** Polyétherpolycarbonatediols selon la revendication 1 ou 2, caractérisés en ce qu'un carbonate de dialkyle contenant des groupements alkyle en $C_1$-$C_3$ est utilisé comme composant C).

**4.** Utilisation des polyétherpolycarbonatediols selon l'une quelconque des revendications 1 à 3 pour la préparation de polyuréthannes thermoplastiques, de polyétheresters, de polyétheramides et d'élastomères de polyuréthanne cellulaires.

**5.** Polyuréthannes thermoplastiques, préparés avec utilisation des polyétherpolycarbonatediols selon l'une quelconque des revendications 1 à 3 comme composant diol.

**6.** Polyétheresters, préparés avec utilisation des polyétherpolycarbonatediols selon l'une quelconque des revendications 1 à 3 comme composant diol.

**7.** Polyétheramides. préparés avec utilisation des polyétherpolycarbonatediols selon l'une quelconque des revendications 1 à 3 comme composant diol.

**8.** Elastomères de polyuréthanne cellulaires, préparés avec utilisation des polyétherpolycarbonatediols selon l'une quelconque des revendications 1 à 3 comme composant diol.

**Revendications pour les Etats contractants suivants : BE, NL**

**1.** Polyétherpolycarbonatediols, constituée essentiellement par
A) 3 à 63,7% en moles de motifs qui dérivent d'un polyoxytétraméthylènediol,

B) 63.7 à 3% en moles de motifs qui dérivent d'un polyoxyalkylènediol différent de A) et contenant des groupements alkylène en $C_2$-$C_8$, d'un alcanediol aliphatique à 2-14 atomes de carbone, d'un alcanediol alicyclique à 3-14 atomes de carbone, d'un oxyde d'alkylène à 2 ou 3 atomes de carbone ou de mélanges de ceux-ci,

C) 33.3 à 50% en moles de motifs qui dérivent de phosgène, d'un carbonate de dialkyle contenant des groupements alkyle en $C_1$-$C_4$, d'un carbonate cyclique à groupements alkylène en $C_2$-$C_4$ de pontage ou de mélanges de ceux-ci.

2. Polyétherpolycarbonatediols selon la revendication 1, caractérisés en ce qu'un diol aliphatique à 2-8 atomes de carbone est utilisé code composant B).

3. Polyétherpolycarbonatediols selon la revendication 1 ou 2, caractérisés en ce qu'un carbonate de dialkyle contenant des groupements alkyle en $C_1$-$C_3$ est utilisé comme composant C).

4. Utilisation des polyétherpolycarbonatediols selon l'une quelconque des revendications 1 à 3 pour la préparation de polyuréthannes thermoplastiques, de polyétheresters, de polyétheramides et d'élastomères de polyuréthanne cellulaires.

5. Polyuréthannes thermoplastiques, préparés avec utilisation des polyétherpolycarbonatediols selon l'une quelconque des revendications 1 à 3 comme composant diol.

6. Polyétheresters, préparés avec utilisation des polyétherpolycarbonatediols selon l'une quelconque des revendications 1 à 3 comme composant diol.

7. Polyétheramides, préparés avec utilisation des polyétherpolycarbonatediols selon l'une quelconque des revendications 1 à 3 comme composant diol.

8. Elastomères de polyuréthanne cellulaires, préparés avec utilisation des polyétherpolycarbonatediols selon l'une quelconque des revendications 1 à 3 comme composant diol.